Europäisches Patentamt

European Patent Office

Office européen des brevets

(11) Publication number: **0 101 147**
**B1**

(12) **EUROPEAN PATENT SPECIFICATION**

(45) Date of publication of patent specification: **26.09.90**

(21) Application number: **83302311.2**

(22) Date of filing: **22.04.83**

(51) Int. Cl.⁵: **F 21 P 1/00,** G 04 C 23/36,
H 01 R 4/26, H 01 R 4/24

(54) **Improvements in and relating to lighting apparatus.**

(30) Priority: **11.08.82 US 406982**

(43) Date of publication of application:
**22.02.84 Bulletin 84/08**

(45) Publication of the grant of the patent:
**26.09.90 Bulletin 90/39**

(84) Designated Contracting States:
**AT BE CH DE FR GB IT LI LU NL SE**

(56) References cited:
**DE-B-1 237 661**
**US-A-2 295 894**
**US-A-3 217 286**
**US-A-3 629 804**
**US-A-3 673 413**
**US-A-3 716 818**
**US-A-3 789 220**
**US-A-3 816 819**

(73) Proprietor: **Yang, Tai-Her**
**5-1 Tay Pyng St.**
**Shi Hwu Jenn Jang Huah Shiann (TW)**

(72) Inventor: **Yang, Tai-Her**
**5-1 Tay Pyng St.**
**Shi Hwu Jenn Jang Huah Shiann (TW)**

(74) Representative: **Arthur, Bryan Edward et al**
**Withers & Rogers 4 Dyer's Buildings Holborn**
**London EC1N 2JT (GB)**

Courier Press, Leamington Spa, England.

## Description

This invention relates to lighting systems of the type which are controlled in accordance with the ambient light intensity. A lighting system in accordance with the invention is especially suitable for general garden and courtyard lighting at night.

In such systems, it is generally unnecessary for the lights to be switched on all night, and therefore a timer is generally employed to switch off the lights, and the system is arranged to give a suitable visual or audible warning before the lights are switched off.

U.S. 3,789,220 discloses a photo-responsive timer circuit for controlling a flood-lighting system. When the ambient light intensity reaches a predetermined level in the morning, a timing sequence is initiated which de-energieses the lighting circuit at the end of a predetermined period of time measured from dawn. The lighting circuit is photo-electrically energised in the evening in response to a fall in the ambient light intensity below a predetermined level.

U.S. 3,673,413 relates to a control circuit for an illuminated advertising display. Lighting for the advertising display is switched on photo-electrically at dusk in response to a detected fall in the ambient light intensity below a predetermined level and is switched off at a predetermined time, e.g. midnight, by a time switch.

Neither of the above patent specifications disclose any means for generating a warning before the lighting circuit is switched off.

U.S. 2,295,894 discloses a controlled lighting system comprising a lighting set, a power supply, and a control circuit arranged to control the supply of power to said lighting set, said control circuit including a photo-detector and being arranged to generate a first control signal for switching on the said lighting set in response to the ambient light intensity falling below a predetermined level, said control circuit further including timer means coupled to said power supply and arranged to generate a second control signal for switching off said lighting set, and an alarm circuit arranged to generate a warning before the lighting set is switched off by said second control signal.

The present invention provides a controlled lighting system which is characterised in that said control circuit includes delay circuitry which is arranged to inhibit the generation of said first control signal until the ambient light intensity has remained below said predetermined level for a predetermined time interval and in that said timer means is activated by a third control signal which is generated in response to the ambient light intensity rising above a predetermined level, and a set interval after being so activated, switches off said lighting set.

Thus, a controlled lighting system in accordance with the invention switches on a lighting set for a predetermined time interval at dusk. Such a lighting system has the advantage that it can automatically adapt itself to the change of seasons to light up the lighting set on time but is not constrained to keep the lighting set on indefinitely during the night. This lighting system has the further advantage over the timer controlled lighting systems of the prior art that it is free from accumulated timing errors which tend to arise over an extended period of usage.

Preferred embodiments of the invention will now be described by way of example with reference to Figures 1 to 5 of the accompanying drawings, of which:-

Figure 1 is a schematic circuit diagram which forms the basis of a lighting system in accordance with the invention;

Figure 2 is a wiring diagram corresponding to the schematic of Figure 1;

Figure 3 is a circuit diagram showing the alarm circuitry incorporated in the lighting system of Figures 1 and 2;

Figure 4 is a pictorial representation of a photo-sensor for use in the lighting system of Figures 1 and 2; and

Figure 5 is a pictorial representation of an alternative photo-sensor arrangement.

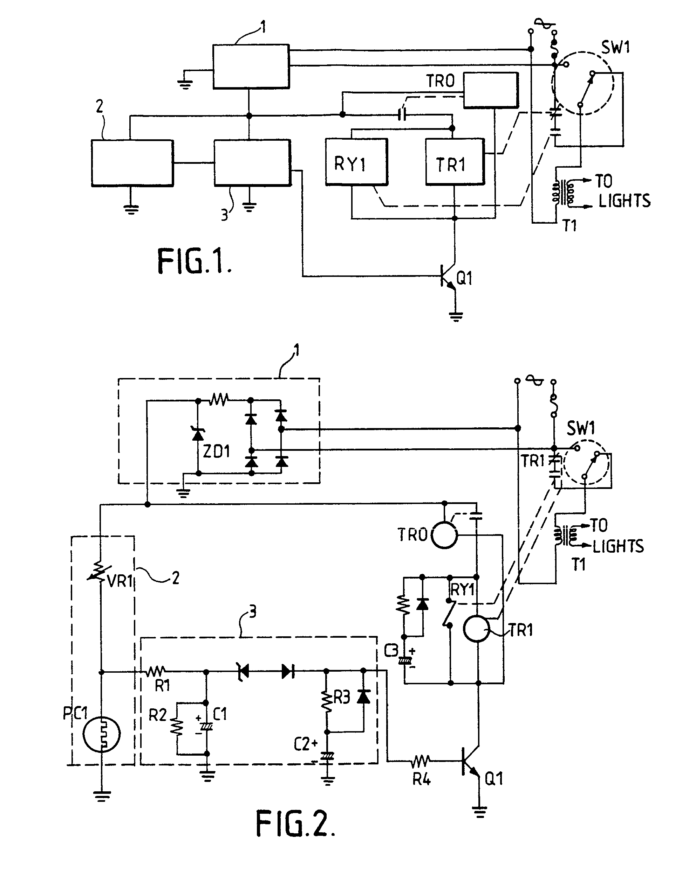

Referring to Figures 1 and 2, lighting system comprises a DC power supply 1 which is fed from AC terminals which also feed the primary of a transformer T1 via a switch SW1. The lighting set (not shown) is powered from the secondary of transformer T1. With the switch SW1 in the position shown, normally open relay contacts of a relay RY1 and normally closed timer contents of a timer TR1 are both in series with the primary of the transformer T1 and form part of the control circuitry which is best illustrated in Figure 2. A photosensing arrangement 2 comprising a CdS photo cell PC1 in series with a variable resistor VR1 feeds a DC signal via a debounce circuit 3 and a resistor R4 to a switching transistor Q1 when the ambient light intensity is low. When this DC level is high, it causes switching transistor Q1 to switch on a timer TR0 whose normally open contacts are in series with a parallel combination of a further timer TR1 and the winding of a relay RY1. After a predetermined interval, the contacts of timer TR0 close and actuate relay RY1. Simultaneously, timer TR1 is started. Accordingly, relay RY1 closes the primary circuit of transformer T1 and switches on the lights. When a predetermined interval as measured by timer TR1 has elapsed, its normally closed contacts are opened and switch off the lights. A debounce circuit 3 prevents transistor Q1 from being switched on by short term DC signals from the photosensing arrangements 2 arising from short term fluctuations in the ambient light intensity.

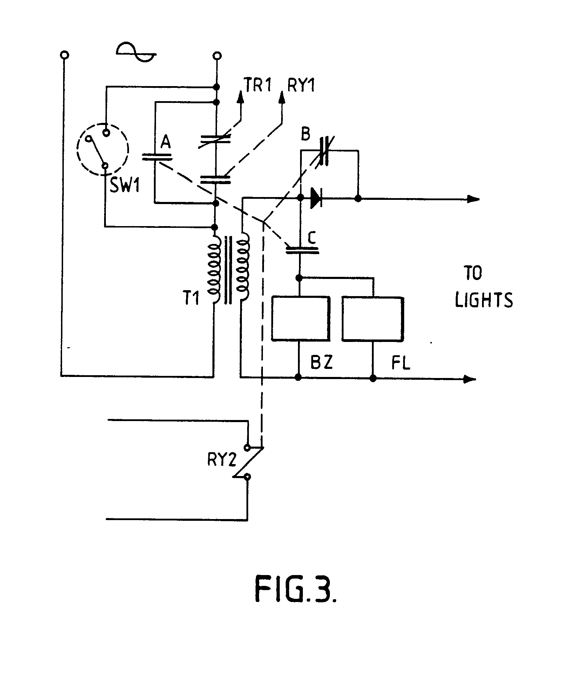

Figure 3 shows the alarm circuitry used in a system in accordance with the invention and based on system shown in Figures 1 and 2. It will be seen that the primary circuit of transformer T1 is modified in that a pair of relay contacts A of a further relay RY2 are provided in parallel with the series combination of the normally closed contacts of relay TR1 and the normally opened contacts of rely RY1 as shown in Figures 1 and 2. The secondary circuit of transformer T1 (connected to the lighting set, not shown) incorporates a normally closed pair of contacts B of relay RY2 in parallel with diode and a normally oen pair of contacts C of this relay connected across the secondary winding in series with a parallel combination of a buzzer BZ and a flasher lamp FL. At a preset time when the lighting set is on, relay RY2 is actuated (by means not shown) and closes contacts A and C to maintain the lighting whilst sounding the buzzer BZ and operating the flashing lamp FL. The operation of the relay RY2 also dims the lights.

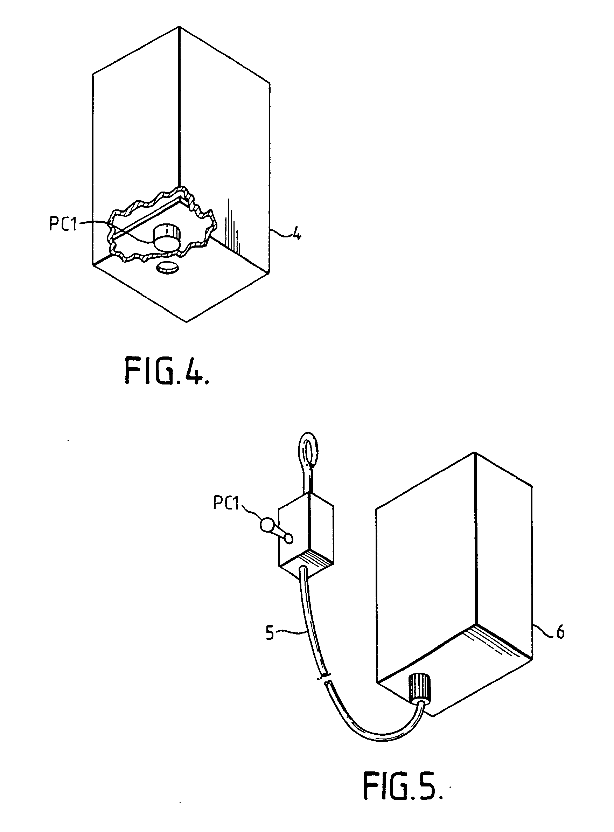

Figure 4 shows the photo cell PC1 housed within a protective box 4 which has a aperture to enable the ambient light level to be detected.

Alternatively the photo cell can be connected to the timing circuitry via a cord 5 as shown in Figure 5. As shown in Figure 5, the photo cell PC1 is externally mounted.

## Claims

1. A controlled lighting system comprising a lighting set, a power supply (1), and a control circuit (2, 3, Q1, TR0, RY1, RY2, TR1) arranged to control the supply of power to said lighting set, said control circuit including a photodetector (PC1) and being arranged to generate a first control signal for switching ON said light set in response to the ambient light intensity falling below a predetermined level, said control circuit further including timer means (TR1) coupled to said power supply and arranged to generate a second control signal for switching OFF said lighting set, and an alarm circuit (RY2, BZ, FL) arranged to generate a warning before the lighting set is switched OFF by said second control signal.

characterised in that said control circuit (2, 3, Q1, TR0, RY1, RY2, TR1) includes delay circuitry (3, TR0, RY1) which is arranged to inhibit the generation of said first control signal until the ambient light intensity has remained below said predetermined level for a predetermined time interval and in that said timer means (TR1) is activated by a third control signal which is generated in response to the ambient light intensity rising above a predetermined level, and at a set interval after being so activated, switches OFF said lighting set.

2. A controlled lighting system as claimed in Claim 1 wherein said delay circuitry (3, TR0, RY1) includes both further timer means (TR0) and an R-C smoothing circuit (3).

3. A controlled lighting system as claimed in Claim 1 or Claim 2, further characterised in that said photodetector (PC1) is located remotely from said control circuitry and is connected thereto by a lead (5).

4. A controlled lighting system as claimed in Claim 1 or Claim 2, further characterised in that said photodetector is housed in a protective housing (4) which is externally located.

5. A lighting system as claimed in any preceding claim wherein said lighting set is arranged to illuminate a garden or courtyard after dusk.

## Patentansprüche

1. Gesteuertes Beleuchtungssystem, das einen Beleuchtungssatz, eine Energiequelle (1) und eine Steuerschaltung (2, 3, Q1, TR0, RY1, RY2, TR1) aufweist, welche derart ausgelegt ist, daß die Stromversorgung zu dem Beleuchtungssatz gesteuert wird, wobei die Steuerschaltung einen Photodetektor (PC1) enthält, der derart ausgelegt ist, daß ein erstes Steuersignal zum Einschalten des Beleuchtungssatzes in Abhängigkeit davon erzeugt, daß die Umgebungslichtintensität unter einen vorbestimmten Wert fällt, wobei die Steuerschaltung ferner eine Zeitgebereinrichtung (TR1) enthält, die mit der Energieversorgung verbunden ist und derart ausgelegt ist, daß ein zweites Steuersignal zum Ausschalten des Beleuchtungssatzes erzeugt wird, und wobei eine Alarmschaltung (RY2, BZ, FL) vorgesehen ist, die derart ausgelegt ist, daß eine Warnung abgegeben wird, bevor der Beleuchtungssatz mittels des zweiten Steuersignals ausgeschaltet wird, dadurch gekennzeichnet, daß die Steuerschaltung (2, 3, Q1, TR0, RY1, RY2, TR1) eine Verzögerungsschaltung (3, TR0, RY1) umfaßt, die derart ausgelegt ist, daß die Erzeugung des errsten Steuerignals unterdrückt wird, bis die Umgebungslichtintensität ständig unterhalb eines vorbestimmten Wertes während einer vorbestimmten Zeitdauer lang bleibt, und daß die Zeitgebereinrichtung (TR1) mittels eines dritten Steuersignals aktiviert wird, das in Abhängigkeit von einem Umgebungslichtintensitätsanstieg über einen vorbestimmten Wert erzeugt wird und der nach einem Vorgabeintervall nach einem derartigen Aktivieren den Beleuchtungssatz ausschaltet.

2. Gesteuertes Beleuchtungssystem nach Anuvruch 1, bei dem die Verzögerungsschlitung 3, TR0, RY1) sowohl eine weitere Zeitgebereinrichtung (TR0) als auch eine R-C-Glättungsschaltung (3) umfaßt.

3. Gesteuertes Beleuchtungssystem nach Anupruch 1 oder Anspruch 2, ferner dadurch gekennzeichnet, daß der Photodetektor PC1) von der Steuerschaltung entfernt liegt und mit dieser über eine Leitung (5) verbunden ist.

4. Gesteuertes Beleuchtungssystem nach Anspruch 1 oder Anspruch 2, ferner dadurch gekennzeichnet, daß der Photodetektor in einem Schutzgehäuse (4) untergebracht ist, das extern vorgesehen ist.

5. Beleuchtungssystem nach einem der vorangehenden Ansprüche, bei dem der Beleuchtungssatz derart ausgelegt ist, daß ein Garten oder ein Innenhof bei der Abenddämmerung beleuchtet wird.

## Revendications

1. Système d'éclairage commandé comprenant un ensemble éclairant, une alimentation (1) en courant, et un circuit de commande (2, 3, Q1, TR0, RY1, RY2, TR1) disposé de manière à commander l'alimentation en courant dudit ensemble éclairant, ledit circuit de commande comprenant un photodétecteur (PC1) et étant disposé de manière à générer un premier signal de commande pour allumer ledit ensemble éclairant en réponse à une intensité de lumière ambiante tombant en dessous d'un seuil prédéterminé, ledit circuit de commande comprenant aussi des moyens de minuterie (TR1) couplés à ladite alimentation en courant et disposés de manière à générer un second signal de commande pour éteindre ledit ensemble élairant, et un circuit d'alarme (RY2, BZ, FL) disposé pour générer un signal d'avertissement avant que l'ensemble éclairant ne soit éteint par ledit second signal de commande, caractérisé en ce que ledit circuit de commande (2, 3, Q1, TR0, RY1, RY2, TR1) comprend des éléments de circuit de temporisation (3, TR0, RY1) qui sont disposés pour inhiber la génération dudit premier signal de commande jusqu'à ce que l'intensité de la lumière ambiante soit demeurée sous un certain seuil prédéterminé pendant un intervalle de temps prédéterminé et en ce que ledits moyens de minuterie (TR1) sont activés par un troisième signal de commande qui est généré en réponse à une intensité de la lumière ambiante dépassant le seuil prédéterminé, et au bout d'un intervalle donné après qu'ils aient été ainsi activés, éteignent ledit ensemble éclairant.

2. Système d'éclairage commandé selon la Revendication 1, dans lequel lesdits éléments de circuit de temporisation (3, TR0, RY1) comprennent à la fois des moyens de minuterie (TR0) et un circuit R-C de filtrage (3).

3. Systéme d'éclairage commandé selon la Revendication 1 ou 2, caractérisé additionnellement en ce que ledit photodétecteur (PC1) est situé à distance desdits éléments de circuit de commande et est relié à eux par un fil d'amenée (5).

4. Système d'éclairage commandé selon la Revendication 1 ou 2, caractérisé additionnellement en ce que ledit photodétecteur est logé dans un boîtier protecteur (4) qui est situé à l'extérieur.

5. Système d'éclairage selon l'une quelconque des Revendications précédentes, dans lequel ledit ensemble éclairant est disposé pour illuminé un jardin ou une cour après la tombée du jour.

FIG.1.

FIG.2.

FIG.3.

PC1

FIG.4.

PC1

5

6

FIG.5.